# EUROPEAN PATENT APPLICATION

(11) **EP 4 727 139 A1**
(43) Date of publication of application: **15.04.2026**
(21) Application number: 24818685.0
(22) Date of filing: 05.06.2024
(51) Int. Cl.: H04N 21/431, H04N 21/488, H04N 21/81

(54) **MEDIA CONTENT PUBLISHING METHOD AND APPARATUS, AND ELECTRONIC DEVICE AND STORAGE MEDIUM**

(30) Priority: 07.06.2023 CN 202310673426
(71) Applicant: Beijing Zitiao Network Technology Co., Ltd., Beijing 100190 (CN)
(72) Inventor: WANG, Xingyi, Beijing 100028 (CN); HU, Xiaoyun, Beijing 100028 (CN)
(74) Representative: Grünecker Patent- und Rechtsanwälte PartG mbB
(86) International application number: PCT/CN2024/097538
(87) International publication number: WO 2024/251153

(57) **Abstract**

Provided in the embodiments of the present disclosure are a media content publishing method and apparatus, and an electronic device and a storage medium. The method comprises: in response to a preset trigger operation for original media content, generating a first resource, wherein the original media content comprises a second resource and a third resource, the first resource and the second resource are the same type of resources, the first resource and the third resource are different types of resources, the first resource is generated on the basis of the third resource, and the first resource is used for presenting the third resource; and publishing the first media content, wherein the first media content at least comprises the first resource and the second resource.

## Description

This application claims the priority of Chinese Patent Application No.202310673426.2 filed on June 7, 2023, the disclosure of which is hereby incorporated in its entirety as a part of the present application.

### TECHNICAL FIELD

Embodiments of the present disclosure relates to a media content posting method and apparatus, an electronic device and a storage medium.

### BACKGROUND

At present, in some platforms, in a process of presenting media content pictures, title content of the media content may be presented on a preset region of a presentation interface. However, a presentation mode of the title content is relatively simple.

### SUMMARY

The embodiments of the present disclosure provide a media content posting method and apparatus, an electronic device and a storage medium.

The embodiments of the present disclosure provide a media content posting method, including:
generating a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource; and
posting first media content, where the first media content at least includes the first resource and the second resource.

The embodiments of the present disclosure provide a media content posting apparatus, including:
a generating module configured to generate a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource; and
a first posting module configured to post first media content, where the first media content at least includes the first resource and the second resource.

The embodiments of the present disclosure provide an electronic device, including:
at least one processor; and
a memory communicatively connected to the at least one processor,
where the memory stores a computer program executable by the at least one processor, and the computer program is executed by the at least one processor to cause the at least one processor to perform the media content posting method according to the embodiments of the present disclosure.

The embodiments of the present disclosure provide a computer-readable storage medium, where the computer-readable storage medium stores computer instructions which, when executed by a processor, cause the processor to implement the media content posting method according to the embodiments of the present disclosure.

### BRIEF DESCRIPTION OF DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1 is a flow diagram of a media content posting method provided by an embodiment of the present disclosure;
Fig. 2 is a schematic diagram of the presentation of title content provided by an embodiment of the present disclosure;
Fig. 3 is a schematic diagram of the presentation of another title content provided by an embodiment of the present disclosure;
Fig. 4 is a schematic diagram of the presentation of first media content provided by an embodiment of the present disclosure;
Fig. 5 is a schematic diagram of the presentation of first media content provided by an embodiment of the present disclosure;
Fig. 6 is a schematic diagram of the presentation of second media content provided by an embodiment of the present disclosure;
Fig. 7 is a schematic diagram of the presentation of a posting interface provided by an embodiment of the present disclosure;
Fig. 8 is a schematic diagram of the presentation of a first resource provided by an embodiment of the present disclosure;
Fig. 9 is a flow diagram of another media content posting method provided by an embodiment of the present disclosure;
Fig. 10 is a schematic diagram of the presentation of another posting interface provided by an embodiment of the present disclosure;
Fig. 11 is a structural block diagram of a media content posting apparatus provided by an embodiment of the present disclosure; and
Fig. 12 is a structural schematic diagram of an electronic device provided by an embodiment of the present disclosure.

### DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as being limited to the embodiments set forth herein. Rather, these embodiments are provided for a thorough and complete understanding of the present disclosure. It should be understood that the drawings and embodiments of the present disclosure are only for exemplary purposes, and are not intended to limit the scope of the present disclosure.

It should be understood that various steps described in method implementations of the present disclosure can be performed in different orders, and/or performed in parallel. In addition, the method implementations can include additional steps and/or omit performing the illustrated steps. The scope of the present disclosure is not limited in this respect.

The term "include/comprise" used herein and the variations thereof are open-ended inclusions, namely, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Relevant definitions of other terms will be given in the description below.

It should be noted that concepts such as "first" and "second" mentioned in the present disclosure are only used to distinguish different apparatuses, modules, or units, and are not used to limit the order of functions performed by these apparatuses, modules, or units or interdependence between these apparatuses, modules, or units.

It should be noted that the modifications of "one" and "a plurality" mentioned in the present disclosure are illustrative rather than restrictive, and those skilled in the art should understand that unless the context clearly indicates otherwise, the modifications should be understood as "one or more".

The names of messages or information exchanged between a plurality of apparatuses in the implementations of the present disclosure are only for illustrative purposes, and are not intended to limit the scope of these messages or information.

It should be understood that before using the technical solutions disclosed in the embodiments of the present disclosure, the user should be informed of the type, scope of use, use scenario, etc. of the personal information involved in the present disclosure in accordance with relevant laws and regulations in an appropriate manner, and the user's authorization should be obtained.

For example, in response to receiving a proactively request from a user, prompting information is sent to the user to explicitly prompt the user that the requested operation will require access to and use of the user's personal information. Thereby, the user is enabled to independently choose whether or not to provide the personal information to software or hardware, such as an electronic device, an application, a server, or a storage medium, that performs the operation of the technical solution of the present disclosure based on the prompting information.

As an optional but non-limiting realization, in response to receiving a proactively request from the user, the manner of sending the prompting information to the user may be, for example, a pop-up window, in which the prompting information may be presented in the form of text. **In** addition, the pop-up window may contain an option control for the user to select "agree" or "disagree" to provide the personal information to the electronic device.

It should be understood that the above notification and user authorization process is only schematic, and does not limit the implementation of the present disclosure, and other ways to meet the relevant laws and regulations may also be applied to the implementation of the present disclosure.

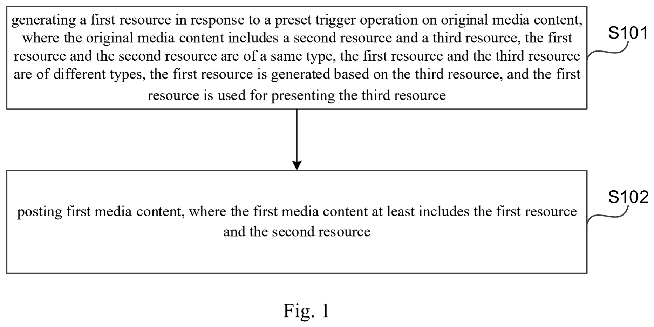

Fig. 1 is a flow diagram of a media content posting method provided by an embodiment of the present disclosure. The method may be executed by a media content posting apparatus, where the apparatus may be implemented by software and/or hardware and may be configured in an electronic device, for example, in a mobile phone or a tablet computer. The media content posting method provided by the embodiment of the present disclosure is applicable to a scene of posting media content, especially for a scene of posting image-text content.

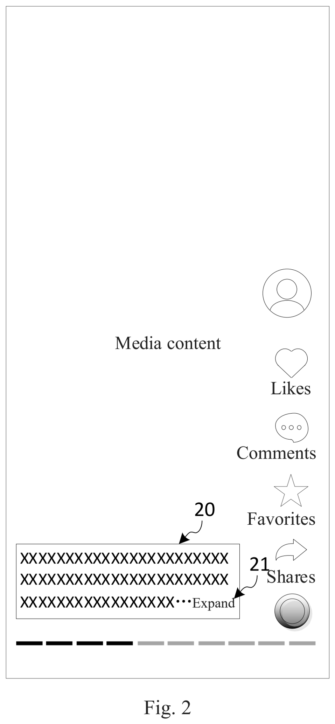

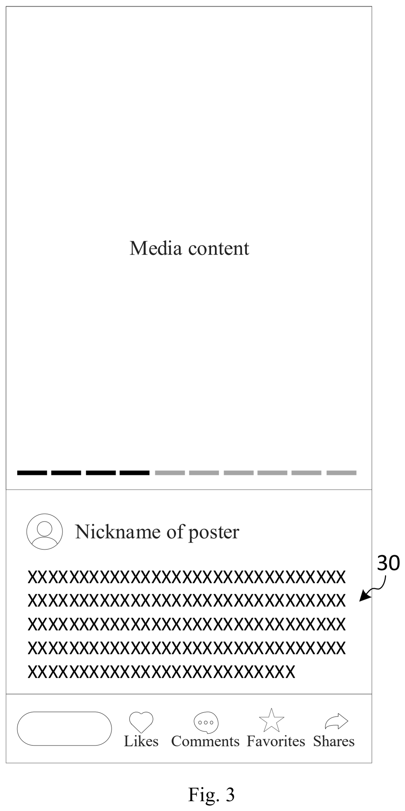

At present, in some platforms, when pictures of media content are presented, title content of the media content will be presented in a preset region 20 for a viewer to view. However, when the title content of the media content is relatively long, the title content cannot be completely presented in the preset region 20, as shown in Fig. 2. At this time, the user needs to switch into a details interface of the media content (as shown in Fig. 3) by a certain trigger operation, such as triggering an expand control 21 shown in the preset region 20, in order to view the complete title content of the media content. Moreover, after switching into the details interface of the media content, the viewer can directly and completely view the title content of the media content in a presentation region 30 of the details interface when the title content is completely presented in the presentation region 30; and when the title content cannot be completely presented in the presentation region 30, the viewer still needs to switch the title content presented in the presentation region 30 by swiping in the presentation region 30, so as to be informed of the whole title content. A presentation mode of the title content is relatively simple, and the operation required to view the title content is relatively complicated, which is not conducive to the viewer to quickly view the title content of the media content.

Therefore, an embodiment of the present disclosure provides a media content posting method, so as to enrich the presentation mode of the title content and simplify the operation required for the viewer to view the title content of the media content.

As shown in Fig. 1, the media content posting method provided by this embodiment may include:
S101: generating a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource.

The original media content may be media content to be posted, which may be video content, image-text content, etc. The image-text content may be media content composed of at least one picture and a text, such as media content in which a plurality of pictures are switched and presented in a preset order and the text is presented on the picture at the same time.

The original media content may include a second resource and a third resource. The second resource and the third resource may be understood as resources of the original media content, such as materials or texts of the original media content. The materials may be selected, photographed or recorded by the user, and the text may be inputted by the user. The second resource and the third resource may be different types of resources.

The first resource may be a resource generated based on the third resource in the original media content, and the first resource may be used for presenting the third resource. The original media content may not include the first resource. For example, before the preset trigger operation is received, the original media content may include the second resource and the third resource, and not include the first resource. Exemplarily, after the media content is posted, the added first resource may be automatically presented along with the playing of the media content, and/or, be subjected to switching presentation with the second resource in the media content based on a switching operation of the viewer.

The first resource and the second resource may be the same type of resources, and the first resource and the third resource may be different types of resources. This embodiment does not limit the specific types of the first resource, the second resource and the third resource. Optionally, the first resource and the second resource are image type resources, and the third resource is a text type resource and/or an audio type resource. For example, the first resource may be a video, video frames and/or pictures, the second resource may be a video, video frames and/or pictures, and the third resource may be a text and/or an audio. The text may be, for example, description information of the original media content, such as title content, etc. The audio may be, for example, a foreground audio or a background audio included in the original media content.

Exemplarily, when the original media content is the image-text content, the first resource and the second resource may be pictures, and the third resource may be the description information of the original media content; when the original media content is the video content, the first resource and the second resource may be video frames, and the third resource may be the description information or audio information of the original media content. When the third resource is audio information, for example, the first resource may be used for presenting text content obtained by speech recognition of the third resource.

The preset trigger operation may be understood as a trigger operation for instructing the generation of the first resource, which may include a media content posting operation or a resource generating operation performed after the addition of the third resource is completed. The media content posting operation may be considered as a trigger operation for instructing the posting of the original media content, such as an operation for triggering a posting control of the original media content or other gesture operations. The resource generating operation may be understood as a trigger operation for instructing the generation of the first resource corresponding to the third resource, which is different from the media content posting operation, and the resource generating operation may be executed by a user (such as a poster) before the media content posting operation is executed. The resource generating operation may be, for example, an operation for triggering a resource generating control of the original media content, or other gesture operations, etc.

In this embodiment, the first resource for presenting the third resource in the original media content may be generated based on the preset trigger operation of the user, so that the third resource in the original media content may be presented through the first resource, which is convenient for the user to view.

Specifically, when the preset trigger operation on the original media content is received, the third resource in the original media content may be acquired, and the first resource may be generated based on the third resource.

In this embodiment, the first resource may be an image type resource, and the third resource may be a text type resource. In this case, the number of generated image type resources may be preset or determined based on a count of characters included in the third resource.

For example, a preset number of generated image type resources may be preset. Therefore, when the preset trigger operation is received, the number of characters to be presented in each to-be-generated image type resource may be determined according to the preset number and the count of characters included in the third resource, and then a size (such as a font size, etc.) of each character in the to-be-generated image type resource may be determined, thereby generating, based on the third resource, the preset number of image type resources as the first resource.

For another example, a presentation size of characters in the image type resources may be preset, for example, presentation sizes of a main title and a subtitle and a spacing between presented characters in the image type resource may be preset. Therefore, when the preset trigger operation is received, one or more image type resources may be generated based on the count of characters included in the third resource and the presentation size. Exemplarily, when the count of characters included in the third resource is small, in other words, when one image type resource can completely present all the characters included in the third resource, only one image type resource may be generated as the first resource; when the count of characters included in the third resource is large, in other words, when one image type resource cannot completely present the characters included in the third resource, a plurality of image type resources may be generated as the first resource. In this case, optionally, the third resource is a text type resource, and the generating a first resource includes: generating at least one image type resource as the first resource according to a count of characters included in the third resource.

S102: posting first media content, where the first media content at least includes the first resource and the second resource.

The first media content may be posted media content including at least the first resource and the second resource, and the types of the first media content and the original media content may be the same or different. Exemplarily, the first media content and the original media content may be the same type of media content; for example, when the original media content is the image-text content, the first media content may be the image-text content, and when the original media content is the video content, the first media content may be the video content.

The first media content may include the first resource and the second resource, and may or may not include the third resource; for example, the generated first resource may be added to the original media content to obtain the first media content; or, the generated first resource is added to the original media content, and the third resource included in the original media content is deleted to obtain the first media content, which may be set as required. Optionally, the first media content further includes the third resource; and the third resource has a different presentation mode from the first resource in the first media content. Exemplarily, the first resource may be presented in the same way as the second resource, and the third resource may be presented in a different way from the second resource. For example, when the posted first media content is presented, the first resource and the second resource in the first media content may be switched and presented on the media content presentation interface, and at least a part of the content of the third resource in the first media content may be presented in the preset region of the media content presentation interface.

Exemplarily, after the first resource is generated, the first media content including at least the first resource and the second resource may be posted; for example, the first media content including at least the first resource and the second resource may be posted immediately after the first resource is generated, or, after the first resource is generated, the posting is not performed temporarily, and when the media content posting operation of the user is received, the first media content at least including the first resource and the second resource is posted.

In this embodiment, the first resource for presenting the third resource in the media content may be generated and the media content including the generated first resource may be posted, so that after the media content is posted, the third resource of the original media content may be presented to the viewer through the first resource included in the media content, and the viewer does not need to switch to the details interface of the media content for viewing, which can enrich the presentation mode of the third resource and simplify the operation required for the viewer to view the third resource of the media content.

In this embodiment, the first resource for presenting the third resource in the original media content may be generated when the preset trigger operation on the original media content is received.

In this embodiment, only when the third resource in the original media content meets the preset condition, the first resource for presenting the third resource may be generated in response to the preset trigger operation on the original media content. In this case, optionally, the generating a first resource in response to a preset trigger operation on the original media content includes: when the third resource meets a preset condition, generating the first resource in response to the preset trigger operation on the original media content.

The preset condition may be set flexibly, and this embodiment does not limit the preset condition. Exemplarily, the preset condition may be set such that the content included in the third resource is large, for example, the content included in the third resource cannot be completely presented in the preset region of the media content presentation interface. Taking the third resource as a text type resource as an example, the preset condition may be set that the count of characters included in the third resource is greater than the preset number of characters. The preset number of characters may be set as required, for example, the preset number of characters may be set as a maximum number of characters of the third resource that can be presented on the media content presentation interface.

Exemplarily, when the preset trigger operation on the original media content is received, it may be judged whether the third resource in the original media content meets the preset condition, and when it is judged that the third resource in the original media content meets the preset condition, the first resource for presenting the third resource is generated.

In this embodiment, when it is determined that the third resource in the original media content does not meet the preset condition, for example, when the third resource can be completely presented in the preset region of the media content presentation interface, the first resource may not be generated, and the second media content may be posted when the media content posting operation on the original media content is received. In this case, the media content posting method provided by this embodiment may further include: when the third resource does not meet the preset condition, posting second media content in response to the media content posting operation, where the second media content includes the second resource and the third resource.

Exemplarily, when the third resource in the original media content meets the preset condition, the first media content may be posted in response to the media content posting operation of the user; and when the third resource in the original media content does not meet the preset condition, the second media content may be posted in response to the media content posting operation of the user.

The first media content and the second media content may be understood as media contents posted based on the original media content. The first media content includes at least the first resource and the second resource in the original media content, and may further include the third resource in the original media content. The second media content includes media of the second resource and the third resource in the original media content, and may not include the first resource.

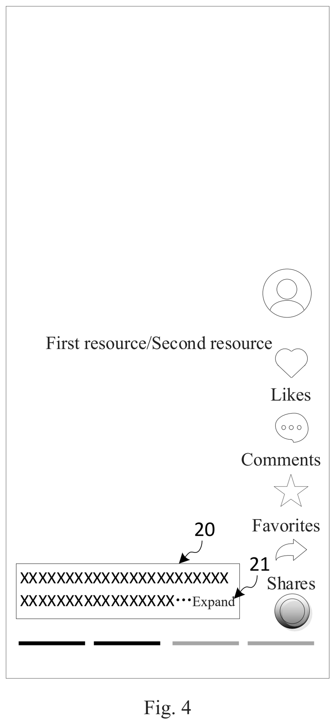

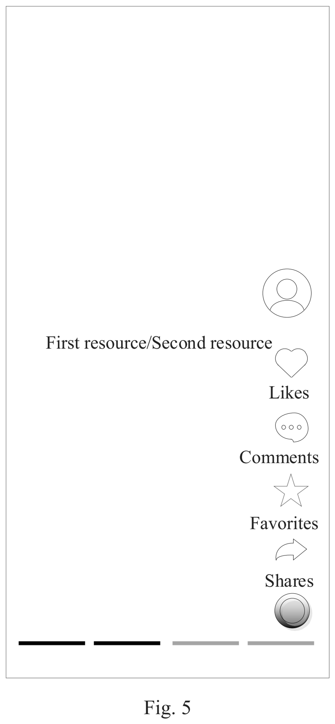

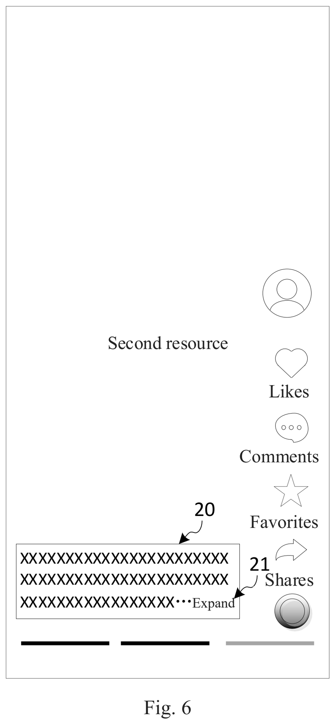

Optionally, a presentation number and/or a presentation form of the third resource in the first media content are/is different from a presentation number and/or a presentation form of the third resource in the second media content. For example, if the posted content is the first media content, when the first media content is presented to the viewer, media content pictures of the first media content may be presented in a main presentation region of the media content presentation interface, for example, the first resource and the second resource in the first media content may be switched and presented in the main presentation region of the media content presentation interface; and, a first number of the third resource is presented in the preset region 20 of the media content presentation interface, for example, a first number of characters in the third resource is presented, as shown in Fig. 4, or the third resource is not presented in the preset region 20 of the media content presentation interface, as shown in Fig. 5, so as to reduce or avoid the blockage to the media content picture caused by the presentation of the third resources. If the posted content is the second media content, when the second media content is presented to the viewer, media content pictures of the first media content may be presented in the main presentation region of the media content presentation interface, for example, the second resource in the second media content is presented in the main presentation region of the media content presentation interface; and a second number of the third resource is presented in the preset region 20 of the media content presentation interface, for example, a second number of characters in the third resource is presented, as shown in Fig. 6. The second number may be greater than the first number.

In some alternative implementations, the preset trigger operation includes a media content posting operation, and after the generating a first resource, the method further includes: adding the first resource to a preset position of the original media content.

In the above implementation, the preset trigger operation may be the media content posting operation, so that when a media content posting operation on the original media content by a user (such as a poster) is received, the first resource may be generated and the first media content including the first resource and the second resource may be posted.

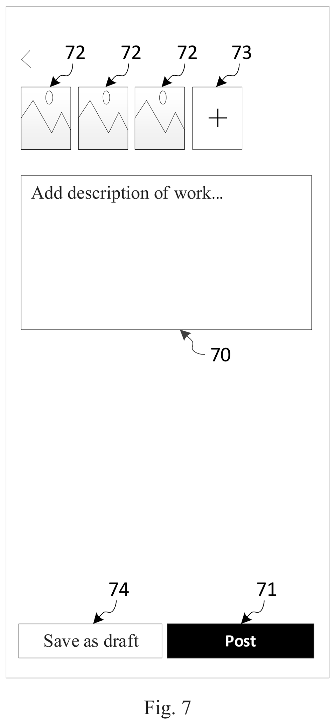

Taking the first resource as an image type resource and the third resource as a text type resource as an example, as shown in Fig. 7, the user may input the description information of the original media content (i.e. the third resource) in a description information input region 70 of the posting interface of the original media content, and after the input of the description information is completed, perform the media content posting operation, such as triggering the posting control 71 displayed on the posting interface.

Therefore, when it is detected that the user triggers the posting control 71 in the posting interface, the current application program may determine that the media content posting operation is received, generate a first resource of the image type based on the description information inputted by the user in the description information input region 70 in response to the media content posting operation, add the first resource to the original media content, such as adding it to the preset position of the original media content, obtain the first media content, and post the first media content.

In addition, as shown in Fig. 7, the posting interface may further display preset information 72 of at least a part of the second resource included in the original media content, a resource adding control 73 and a save control 74. The preset information of the second resource may be understood as a preset type of information of the second resource, such as the identification information and/or preview information of the second resource. Therefore, the user can view the information of the second resource in the posting interface, add a new second resource to the original media content by triggering the resource adding control 73, and/or save the original media content by triggering the save control 74.

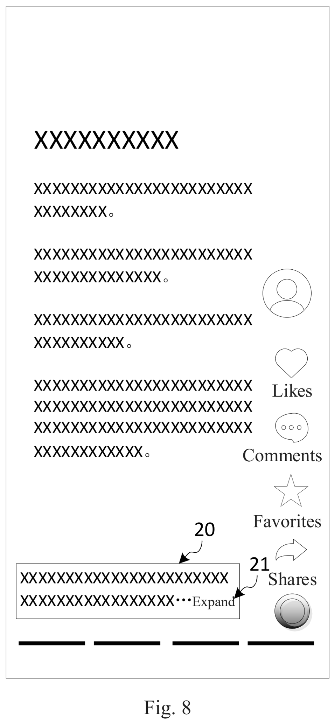

In an exemplary scene, the original media content may be image-text content, the first resource and the second resource may be pictures, the third resource may be description information of the image-text content, and the preset trigger operation may be a media content posting operation. Therefore, when the preset trigger operation on the image-text content is received, a new picture for presenting the description information of the image-text content may be generated, the new picture is added, as picture content in the image-text content, to the preset position of the image-text content, and the first media content added with the new picture is posted. Therefore, when the first media content is presented to the viewer on the media content presentation interface, pictures in the first media content (including a new picture for presenting the description information of the first media content, as shown in Fig. 8) may be switched and presented in sequence according to a preset time interval, and/or the pictures in the first media content may be switched and presented based on the switching operation of the viewer.

According to the media content posting method provided by this embodiment, a first resource is generated in response to a preset trigger operation on original media content, where the original media content includes a second resource and a third resource, the first resource and the second resource are of the same type, the first resource and the third resource are of different types, the first resource is generated based on the third resource, and the first resource is used for presenting the third resource; and a first media content including at least the first resource and the second resource is posted. In this embodiment, with the adoption of the above technical solution, the first resource is used for presenting the third resource, so that the presentation mode of the third resource can be enriched and the operations required for the viewer to view the third resource of the media content can be simplified.

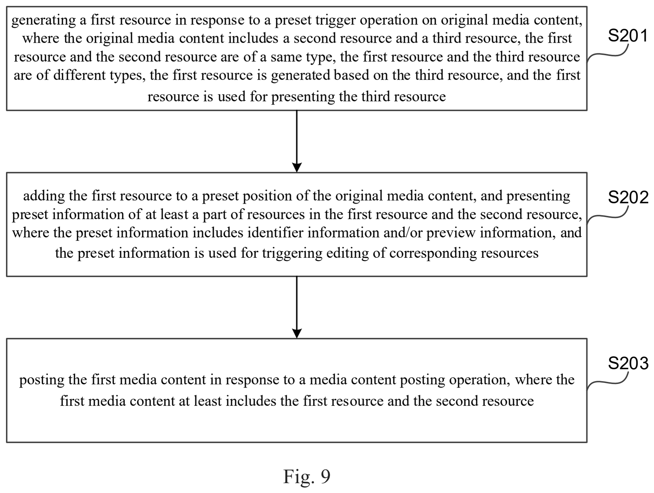

Fig. 9 is a flow diagram of another media content posting method provided by an embodiment of the present disclosure. The solution in this embodiment may be combined with one or more alternatives in the above embodiments. Optionally, the preset trigger operation includes an editing completion operation for the third resource, and the posting first media content includes: posting the first media content in response to a media content posting operation.

Optionally, after the generating a first resource, the method further includes: adding the first resource to a preset position of the original media content, and presenting preset information of at least a part of resources in the first resource and the second resource, where the preset information includes identifier information and/or preview information, and the preset information is used for triggering editing of corresponding resources.

Accordingly, as shown in Fig. 9, the media content posting method provided by this embodiment may include:
S201: generating a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource.

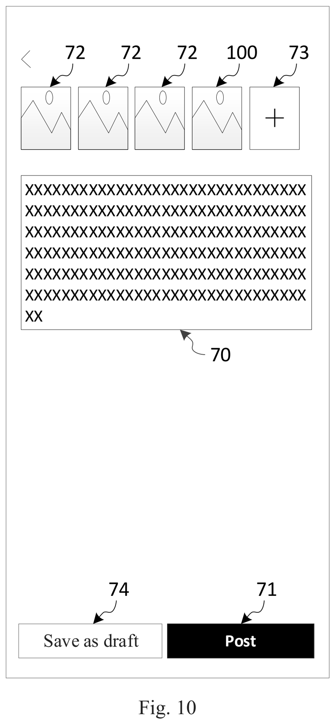

In some implementations, the preset trigger operation may be a different trigger operation from the media content posting operation, in other words, the preset trigger operation may not be used to instruct to post the first media content or the second media content. Exemplarily, the preset trigger operation may be a resource generating operation for instructing the generation of the first resource, such as an operation for triggering a resource generating control (not shown in Fig. 10) displayed on the posting interface, etc.

It can be understood that, in some implementations, the first resource may be generated after the addition of the third resource is completed, such as after the description information of the original media content is inputted; in this case, the preset trigger operation may also be an addition completion operation for the third resource, that is, an operation to indicate that the addition of the third resource is completed.

S202: adding the first resource to a preset position of the original media content, and presenting preset information of at least a part of resources in the first resource and the second resource, where the preset information includes identifier information and/or preview information, and the preset information is used for triggering editing of corresponding resources.

The preset position may be understood as a preset adding position of the first resource. The preset position may be set as required, for example, the preset position may be a position before each second resource, a position after each second resource or a position between some two second resources, etc. The following takes the preset position after the second resource as an example. In this case, the first resource may be added after the last second resource in the original media content, so that when the media content is presented on the media content presentation interface after being posted, the added first resource may be presented after each second resource, as shown in Fig. 8 (Fig. 8 takes the first resource as an image type resource and the third resource as a text type resource as an example). The preset information may include identification information and/or preview information. The identification information of a certain resource may be considered as information for identifying the resource; the preview information of a certain resource may be information for previewing the resource, such as information for presenting a preview picture of the resource. Exemplarily, the preview information may be a thumbnail.

In this embodiment, after the generation of the first resource is completed, the first resource may be added to the preset position of the original media content, and the preset information of at least a part of resources in the first resource and the second resource may be presented, so as to facilitate the user (such as the poster) to view.

For example, the first resource may be added to the position after each second resource in the original media content, and at least part of the preset information 100 of the first resource and at least part of the preset information 72 of the second resource may be presented on the posting interface, as shown in Fig. 10.

In this embodiment, the way of adding the first resource may be flexibly set. In some implementations, the adding the first resource to a preset position of the original media content includes: adding the first resource as a resource juxtaposed with the second resource to the preset position of the original media content, where the first resource and the second resource support switching by using a same switching operation. That is, the first resource may be added to the original media content as a resource juxtaposed with the second resource, so that the first resource can be presented in the same way as the second resource when the posted media content is presented on the media display interface, and/or the viewer can be supported to switch between the first resource and the second resource by the same switching operation for viewing. The statement that the viewer can be supported to switch between the first resource and the second resource by the same switching operation for viewing may be understood as that the viewer can switch between different first resources and different second resources for viewing, switch the first resource to the second resource and switch the second resource to the first resource, through the same switching operation.

In the above implementations, the first resource and the second resource may each include at least one image, so that the first resource may be added to the preset position of the original media content as an image resource juxtaposed with the second resource, enabling the first resource and the second resource together to constitute an image set of the original media content. In this case, optionally, the first resource and the second resource each include at least one image, and the adding the first resource as a resource juxtaposed with the second resource to the preset position of the original media content includes: merging the first resource and the second resource into an image set, where a plurality of images in the image set support sliding switching. Therefore, the poster and the viewer can switch to view different images in the image set by swiping.

In some implementations, after the presenting preset information of at least a part of resources in the first resource and the second resource, the method further includes at least one of: adjusting an arrangement order between the first resource and the second resource in response to a first trigger operation on the preset information of the first resource; and displaying an editing interface of the first resource in response to a second trigger operation on the preset information of the first resource, where the editing interface is used for editing a presentation style of the first resource, and the presentation style includes at least one of a presentation background and a typesetting style.

The first trigger operation may be a trigger operation for instructing the adjustment of the arrangement order between the first resource and the second resource, such as an operation of long-pressing and dragging the preset information of the first resource or the preset information of the second resource to adjust the arrangement order between the preset information of the first resource and the preset information of the second resource, and further adjust the arrangement order between the first resource and the second resource.

The second trigger operation may be a trigger operation for instructing the display of the editing interface of the first resource, such as clicking the preset information of the first resource or clicking an editing control corresponding to the preset information of the first resource.

The presentation background of the first resource may be understood as a background when the first resource presents the third resource; and the typesetting style of the first resource may be understood as a typesetting style of the third resource when the first resource presents the third resource. Taking the first resource as an image type resource and the third resource as a text type resource as an example, the presentation background of the first resource may be understood as a background of the image when the text type resource is presented in the form of an image; and the typesetting style of the first resource may be understood as a typesetting style of the text type resource in the picture of the image when the text type resource is presented in the form of an image.

Exemplarily, as shown in Fig. 10, preset information 100 of at least part of the first resource and preset information 72 of at least part of the second resource may be presented on the posting interface. The arrangement order of the preset information of resources (including the first resource and the second resource) on the posting interface may be used to characterize the arrangement order of the resources in the original media content.

Therefore, when the first trigger operation on the preset information 100 of the first resource is received, such as when it is detected that the user presses and drags the preset information 100 of a certain first resource, the preset information 100 of the first resource may be controlled to move along with the first trigger operation, so as to adjust the arrangement order between the preset information 100 of the first resource and the preset information 72 of the second resource, and further adjust the arrangement order of the first resource and the second resource.

When the second trigger operation on the preset information 100 of the first resource is received, for example, when it is detected that the user clicks the preset information 100 of a certain first resource, the editing interface of the first resource, such as an editing interface for presenting the original media content, may be presented, and a picture of the first resource may be presented in the editing interface. Therefore, the user can edit the presentation background and/or the typesetting style of the first resource on the editing interface, and an editing mode of the presentation background and/or typesetting style of the first resource is not limited in this embodiment.

S203: posting the first media content in response to a media content posting operation, where the first media content at least includes the first resource and the second resource.

Exemplarily, when the media content posting operation is received, the media content added with the first resource may be posted. For example, when it is detected that the user triggers the posting control 71 on the posting interface (as shown in Fig. 10), the first media content including at least the first resource and the second resource may be posted.

In the media content posting method provided by this embodiment, by adding the first resource for presenting the third resource and presenting the preset information of the first resource, the presentation mode of the third resource can be enriched, and the operations required for the viewer to view the third resource can be simplified; and the operations required for the poster to view the generated resource information of the first resource can be simplified, thereby improving the posting efficiency of the poster.

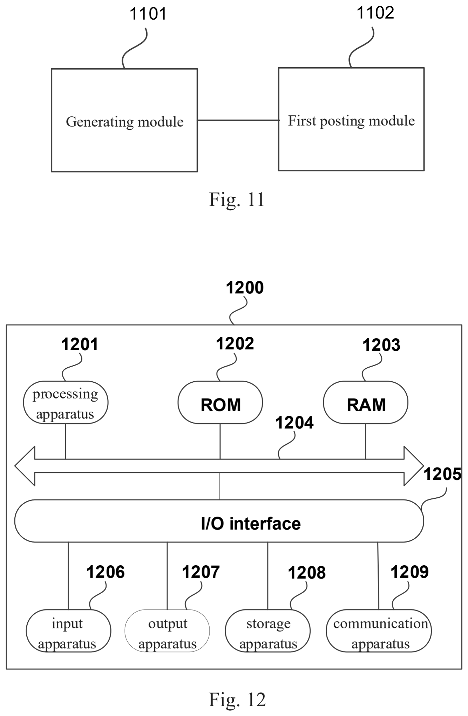

Fig. 11 is a structural block diagram of a media content posting apparatus provided by an embodiment of the present disclosure. The apparatus may be implemented by software and/or hardware, and may be configured in an electronic device, for example, in a mobile phone or a tablet computer, and the media content, such as image-text content, may be posted by performing the media content posting method. As shown in Fig. 11, the media content posting apparatus provided by this embodiment may include: a generating module 1101 and a first posting module 1102.

The generating module 1101 is configured to generate a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource.

The first posting module 1102 is configured to post first media content, where the first media content at least includes the first resource and the second resource.

According to the media content posting apparatus provided by this embodiment, a first resource is generated by the generating module in response to a preset trigger operation on original media content, where the original media content includes a second resource and a third resource, the first resource and the second resource are of the same type, the first resource and the third resource are of different types, the first resource is generated based on the third resource, and the first resource is used for presenting the third resource; and first media content including at least the first resource and the second resource is posted by the first posting module. In this embodiment, with the adoption of the above technical solution, the first resource is used for presenting the third resource, so that the presentation mode of the third resource can be enriched and the operations required for the viewer to view the third resource of the media content can be simplified.

In the above solution, the first resource and the second resource may be image type resources and the third resource may be a text type resource and/or an audio type resource.

In the above solution, the third resource may be a text type resource, and the generating module 1101 may be configured to: generate at least one image type resource as the first resource according to a count of characters in the third resource.

In the above solution, the preset trigger operation may include an editing completion operation for the third resource, and the first posting module 1102 may be configured to: post the first media content in response to a media content posting operation.

Further, the media content posting apparatus provided by this embodiment may further include: a first adding module configured to add the first resource to a preset position of the original media content after the first resource is generated, and present preset information of at least a part of resources in the first resource and the second resource, where the preset information includes identifier information and/or preview information, and the preset information is used for triggering editing of corresponding resources.

In the above solution, the adding module may be configured to: add the first resource as a resource juxtaposed with the second resource to the preset position of the original media content, where the first resource and the second resource support switching by using a same switching operation.

In the above solution, the first resource and the second resource may each include at least one image, and the adding module may be configured to: merge the first resource and the second resource into an image set, where a plurality of images in the image set support sliding switching.

Further, the media content posting apparatus provided by this embodiment may further include: an order adjustment module configured to adjust, after the presenting preset information of at least a part of resources in the first resource and the second resource, an arrangement order between the first resource and the second resource in response to a first trigger operation on the preset information of the first resource; and an editing module configured to display, after the presenting preset information of at least a part of resources in the first resource and the second resource, an editing interface of the first resource in response to a second trigger operation on the preset information of the first resource, where the editing interface is used for editing a presentation style of the first resource, and the presentation style includes at least one of a presentation background and a typesetting style.

In the above solution, the preset trigger operation may include a media content posting operation, and the media content posting apparatus provided by this embodiment may further include: a second adding module configured to add the first resource to the preset position of the original media content after the first resource is generated.

In the above solution, the generating module 1101 may be configured to: when the third resource meets a preset condition, generate the first resource in response to the preset trigger operation on the original media content.

Further, the media content posting apparatus provided by this embodiment may further include: a second posting module configured to post second media content in response to the media content posting operation when the third resource does not meet the preset condition, where the second media content includes the second resource and the third resource.

In the above solution, a presentation number and/or a presentation form of the third resource in the first media content may be different from a presentation number and/or a presentation form of the third resource in the second media content.

In the above solution, the first media content may further include the third resource; and the third resource may have a different presentation mode from the first resource in the first media content.

The media content posting apparatus provided by the embodiment of the present disclosure can execute the media content posting method provided by any of the embodiments of the present disclosure, and has corresponding functional modules for executing the media content posting method and beneficial effects. For technical details not elaborated in this embodiment, reference may be made to the media content posting method provided in any embodiment of the present disclosure.

Reference is made to Fig. 12 below, which illustrates a schematic structural diagram of an electronic device (such as the terminal device) 1200 suitable for implementing the embodiments of the present disclosure. The terminal device in the embodiments of the present disclosure may include but not be limited to a mobile terminal such as a mobile phone, a notebook computer, a digital broadcast receiver, a personal digital assistant (PDA), a tablet computer (PAD), a portable multimedia player (PMP), a vehicle-mounted terminal (such as vehicle-mounted navigation terminal), and a fixed terminal such as digital a TV, a desktop computer, etc. The electronic device shown in Fig. 12 is only an example, and should not bring any limitation to the functions and scope of use of the embodiments of the present disclosure.

As shown in Fig. 12, the electronic device 1200 may include a processing apparatus (e.g., a central processing unit, a graphics processing unit, etc.) 1201 that may perform various appropriate actions and processes according to a program stored in a read-only memory (ROM) 1202 or a program loaded from a storage apparatus 1208 into a random-access memory (RAM) 1203. In the RAM 1203, various programs and data necessary for the operation of the electronic device 1200 are also stored. The processing apparatus 1201, the ROM 1202, and the RAM 1203 are connected to each other through a bus 1204. An input/output (I/O) interface 1205 is also connected to the bus 1204.

Generally, the following apparatuses may be connected to the I/O interface 1205: an input apparatus 1206 including, for example, a touchscreen, a touchpad, a keyboard, a mouse, a camera, a microphone, an accelerometer, a gyroscope, etc.; an output apparatus 1207 including, for example, a liquid crystal display (LCD), a speaker, a vibrator, etc.; the storage apparatus 1208 including, for example, a magnetic tape, a hard disk, etc.; and a communication apparatus 1209. The communication apparatus 1209 may allow the electronic device 1200 to perform wireless or wired communication with other devices to exchange data. Although Fig. 8 shows the electronic device 1200 having various apparatuses, it should be understood that it is not required to implement or have all of the illustrated apparatuses. More or fewer apparatuses may be implemented or provided alternatively.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, and the computer program includes program codes for executing the method shown in the flowchart. In such an embodiment, the computer program may be downloaded and installed from a network through the communication apparatus 1209, or installed from the storage apparatus 1208, or installed from the ROM 1202. When the computer program is executed by the processing apparatus 1201, the above functions defined in the method of the embodiments of the present disclosure are executed.

It should be noted that the above computer-readable medium in the present disclosure may be a computer-readable signal medium, or a computer-readable storage medium, or any combination of the above two. The computer-readable storage medium may be, for example, but not limited to, an electronic, magnetic, optical, electromagnetic, infrared, or semiconductor system, apparatus, or device, or any combination of the above. More specific examples of the computer-readable storage medium may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as part of a carrier wave, and computer-readable program codes are carried therein. This propagated data signal may take many forms, including but not limited to an electromagnetic signal, an optical signal, or any suitable combination of the above. The computer-readable signal medium may also be any computer-readable medium other than the computer-readable storage medium. The computer-readable signal medium may send, propagate, or transmit a program for use by or in combination with an instruction execution system, apparatus, or device. The program codes contained on the computer-readable medium may be transmitted by any suitable medium, including but not limited to: a wire, an optical cable, RF (radio frequency), etc., or any suitable combination of the above.

In some implementations, the electronic device may communicate using any currently known or future-developed network protocol, such as HTTP (HyperText Transfer Protocol), and may be interconnected with digital data communication (for example, communication network) in any form or medium. Examples of communication networks include local area networks ("LAN"), wide area networks ("WAN"), international network (for example, the Internet), and end-to-end networks (for example, ad hoc end-to-end networks), as well as any currently known or future-developed networks.

The above computer-readable medium may be included in the above electronic device; or may exist alone without being assembled into the electronic device.

The above computer-readable medium carries one or more programs that, when executed by the electronic device, cause the electronic device to: generate a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource; and post first media content, where the first media content at least includes the first resource and the second resource.

Computer program codes for performing the operations of the present disclosure may be written in one or more programming languages or a combination thereof. The above programming languages include, but are not limited to, object-oriented programming languages such as Java, Smalltalk, C++, and also include conventional procedural programming languages such as "C" language or similar programming languages. The program codes may be executed entirely on a user's computer, partly on a user's computer, as a stand-alone software package, partly on a user's computer and partly on a remote computer, or entirely on a remote computer or a server. In the case of the remote computer, the remote computer may be connected to the user's computer through any kind of network, including a local area network (LAN) or a wide area network (WAN), or may be connected to an external computer (for example, connected through the Internet using an Internet service provider).

The flowcharts and block diagrams in the drawings illustrate possible architecture, function, and operation implementations of the system, method, and computer program product according to various embodiments of the present disclosure. In this regard, each block in the flowcharts or block diagrams may represent a module, a program segment, or a part of codes, and the module, the program segment, or the part of codes contains one or more executable instructions for implementing specified logical functions. It should also be noted that in some alternative implementations, the functions marked in the blocks may also occur in a different order than the order marked in the drawings. For example, two blocks shown in succession may actually be executed substantially in parallel, or may sometimes be executed in a reverse order, which depends on the functions involved. It should also be noted that each block in the block diagrams and/or flowcharts, and the combination of blocks in the block diagrams and/or flowcharts, may be implemented by a dedicated hardware-based system that performs specified functions or operations, or may be implemented by a combination of dedicated hardware and computer instructions.

The modules involved in the embodiments of the present disclosure may be implemented in software or hardware. The name of a module does not constitute a limitation on the module itself under certain circumstances.

The functions described above in this document may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, the machine-readable medium may be a tangible medium that may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, Example 1 provides a media content posting method, including:
generating a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource; and
posting first media content, where the first media content at least includes the first resource and the second resource.

According to one or more embodiments of the present disclosure, Example 2 is provided according to the method of Example 1, where the first resource and the second resource are image type resources, and the third resource is a text type resource and/or an audio type resource.

According to one or more embodiments of the present disclosure, Example 3 is provided according to the method of Example 2, where the third resource is a text type resource, and the generating a first resource includes:
generating at least one image type resource as the first resource according to a count of characters in the third resource.

According to one or more embodiments of the present disclosure, Example 4 is provided according to the method of Example 1, where the preset trigger operation includes an editing completion operation for the third resource, and the posting the first media content includes:
posting the first media content in response to a media content posting operation.

According to one or more embodiments of the present disclosure, Example 5 is provided according to the method of Example 1, where after the generating a first resource, the method further includes:
adding the first resource to a preset position of the original media content, and presenting preset information of at least a part of resources in the first resource and the second resource, where the preset information includes identifier information and/or preview information, and the preset information is used for triggering editing of corresponding resources.

According to one or more embodiments of the present disclosure, Example 6 is provided according to the method of Example 5, where the adding the first resource to a preset position of the original media content includes:
adding the first resource as a resource juxtaposed with the second resource to the preset position of the original media content, where the first resource and the second resource support switching by using a same switching operation.

According to one or more embodiments of the present disclosure, Example 7 is provided according to the method of Example 6, where the first resource and the second resource each include at least one image, and the adding the first resource as a resource juxtaposed with the second resource to the preset position of the original media content includes:
merging the first resource and the second resource into an image set, where a plurality of images in the image set support sliding switching.

According to one or more embodiments of the present disclosure, Example 8 is provided according to the method of Example 5, where after the presenting preset information of at least a part of resources in the first resource and the second resource, the method further includes at least one of:
adjusting an arrangement order between the first resource and the second resource in response to a first trigger operation on the preset information of the first resource; and
displaying an editing interface of the first resource in response to a second trigger operation on the preset information of the first resource, where the editing interface is used for editing a presentation style of the first resource, and the presentation style includes at least one of a presentation background and a typesetting style.

According to one or more embodiments of the present disclosure, Example 9 is provided according to the method of Example 1, where the preset trigger operation includes a media content posting operation, and after the generating a first resource, the method further includes:
adding the first resource to the preset position of the original media content.

According to one or more embodiments of the present disclosure, Example 10 is provided according to the method of any one of Examples 1-9, where the generating a first resource in response to a preset trigger operation on original media content includes:
when the third resource meets a preset condition, generating the first resource in response to the preset trigger operation on the original media content.

According to one or more embodiments of the present disclosure, Example 11 is provided according to the method of Example 10, where the media content posting method further includes:
when the third resource does not meet the preset condition, posting second media content in response to the media content posting operation, where the second media content includes the second resource and the third resource.

According to one or more embodiments of the present disclosure, Example 12 is provided according to the method of Example 11, where a presentation number and/or a presentation form of the third resource in the first media content are/is different from a presentation number and/or a presentation form of the third resource in the second media content.

According to one or more embodiments of the present disclosure, Example 13 is provided according to the method of any one of Examples 1-9, where the first media content further includes the third resource; and the third resource has a different presentation mode from the first resource in the first media content.

According to one or more embodiments of the present disclosure, Example 14 provides a media content posting apparatus, including:
a generating module configured to generate a first resource in response to a preset trigger operation on original media content, where the original media content includes a second resource and a third resource, the first resource and the second resource are of a same type, the first resource and the third resource are of different types, the first resource is generated based on the third resource, and the first resource is used for presenting the third resource; and
a first posting module configured to post first media content, where the first media content at least includes the first resource and the second resource.

According to one or more embodiments of the present disclosure, Example 15 provides an electronic device, including:
at least one processor; and
a memory communicatively connected to the at least one processor,
where the memory stores a computer program executable by the at least one processor, and the computer program is executed by the at least one processor to cause the at least one processor to perform the media content posting method according to any one of Examples 1-13.

According to one or more embodiments of the present disclosure, Example 1 provides a computer-readable storage medium, where the computer-readable storage medium stores computer instructions which, when executed by a processor, cause the processor to implement the media content posting method according to any one of Examples 1-13.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, but also covers other technical solutions formed by any combination of the above technical features or their equivalent features without departing from the above disclosed concept, for example, a technical solution formed by replacing the above features with technical features with similar functions disclosed in the present disclosure (but not limited to).

In addition, although the operations are described in a particular order, this should not be understood as requiring that the operations be performed in the particular order shown or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments, either individually or in any suitable sub-combination.

Although the present subject matter has been described in language specific to structural features and/or logical actions of the method, it should be understood that the subject matter defined in the appended claims is not necessarily limited to the specific features or actions described above. Rather, the specific features and actions described above are merely exemplary forms for implementing the claims.

## Claims

1. A media content posting method, comprising:
generating a first resource in response to a preset trigger operation on original media content, wherein the original media content comprises a second resource and a third resource, the first resource and the second resource are of a same type, the first resource and the third resource are of different types, the first resource is generated based on the third resource, and the first resource is used for presenting the third resource; and
posting first media content, wherein the first media content at least comprises the first resource and the second resource.

2. The method according to claim 1, wherein the first resource and the second resource are image type resources, and the third resource is a text type resource and/or an audio type resource.

3. The method according to claim 2, wherein the third resource is a text type resource, and the generating a first resource comprises:
generating at least one image type resource as the first resource according to a count of characters in the third resource.

4. The method according to claim 1, wherein the preset trigger operation comprises an editing completion operation for the third resource, and the posting the first media content comprises:
posting the first media content in response to a media content posting operation.

5. The method according to claim 1, wherein after the generating a first resource, the method further comprises:
adding the first resource to a preset position of the original media content, and presenting preset information of at least a part of resources in the first resource and the second resource, wherein the preset information comprises identifier information and/or preview information, and the preset information is used for triggering editing of corresponding resources.

6. The method according to claim 5, wherein the preset position is a position before each second resource, a position after each second resource, or a position between any two second resources in the original media content.

7. The method according to claim 5, wherein the adding the first resource to a preset position of the original media content comprises:
adding the first resource as a resource juxtaposed with the second resource to the preset position of the original media content, wherein the first resource and the second resource support switching by using a same switching operation.

8. The method according to claim 7, wherein the first resource and the second resource support switching by using a same switching operation comprises:
switching to view different first resources and different second resources through the switching operation, and switching the first resource to the second resource and the second resource to the first resource through the switching operation.

9. The method according to claim 7, wherein the first resource and the second resource each comprise at least one image, and the adding the first resource as a resource juxtaposed with the second resource to the preset position of the original media content comprises:
merging the first resource and the second resource into an image set, wherein a plurality of images in the image set support sliding switching.

10. The method according to claim 5, wherein after the presenting preset information of at least a part of resources in the first resource and the second resource, the method further comprises at least one of:
adjusting an arrangement order between the first resource and the second resource in response to a first trigger operation on the preset information of the first resource; and
displaying an editing interface of the first resource in response to a second trigger operation on the preset information of the first resource, wherein the editing interface is used for editing a presentation style of the first resource, and the presentation style comprises at least one of a presentation background and a typesetting style.

11. The method according to claim 10, wherein the presentation background of the first resource is a background when the first resource presents the third resource; and the typesetting style of the first resource is a typesetting style of the third resource when the first resource presents the third resource.

12. The method according to claim 1, wherein the preset trigger operation comprises a media content posting operation, and after the generating a first resource, the method further comprises:
adding the first resource to the preset position of the original media content.

13. The method according to any one of claims 1-12, wherein the generating a first resource in response to a preset trigger operation on original media content comprises:
when the third resource meets a preset condition, generating the first resource in response to the preset trigger operation on the original media content.

14. The method according to claim 13, wherein in response to the third resource being a text type resource, the preset condition is that the count of characters in the third resource is greater than a preset number of characters, and the preset number of characters is a maximum number of characters used for presenting the third resource in a media content presentation interface.

15. The method of claim 13, further comprising:
when the third resource does not meet the preset condition, posting second media content in response to the media content posting operation, wherein the second media content comprises the second resource and the third resource.

16. The method according to claim 15, wherein a presentation number and/or a presentation form of the third resource in the first media content are/is different from a presentation number and/or a presentation form of the third resource in the second media content.

17. The method according to any one of claims 1-12, wherein the first media content further comprises the third resource; and the third resource has a different presentation mode from the first resource in the first media content.

18. A media content posting apparatus, comprising:
a generating module configured to generate a first resource in response to a preset trigger operation on original media content, wherein the original media content comprises a second resource and a third resource, the first resource and the second resource are of a same type, the first resource and the third resource are of different types, the first resource is generated based on the third resource, and the first resource is used for presenting the third resource; and
a first posting module configured to post first media content, wherein the first media content at least comprises the first resource and the second resource.

19. An electronic device, comprising:
at least one processor; and
a memory communicatively connected to the at least one processor,
wherein the memory stores a computer program executable by the at least one processor, and the computer program is executed by the at least one processor to cause the at least one processor to perform the media content posting method according to any one of claims 1-17.

20. A computer-readable storage medium, wherein the computer-readable storage medium stores computer instructions which, when executed by a processor, cause the processor to implement the media content posting method according to any one of claims 1-17.
